# EUROPEAN PATENT APPLICATION

(11) **EP 2 532 322 A1**
(43) Date of publication of application: **12.12.2012**
(21) Application number: 11169363.6
(22) Date of filing: 09.06.2011
(51) Int. Cl.: A61C 13/08, A61C 13/09, A61C 19/10

(54) **Tooth structure connected to and fully protruding over display carrier**

(71) Applicant: WESTCAM Projeckmanagement GmbH, 6068 Mils (AT)
(72) Inventor: Mühlburger, Norbert, 6068 Mils (AT); Rettenwander, Thomas, 6068 Mils (AT); Perdikouri, Christina, 6068 Mils (AT)
(74) Representative: Dilg, Haeusler, Schindelmann Patentanwaltsgesellschaft mbH

(57) **Abstract**

An arrangement (100) comprising a support plate (102), at least one artificial tooth structure (104) supported by and completely protruding over the support plate (102), and at least one sprue (106) each of which interconnecting the support plate (102) with a base portion (108) of a respective one of the at least one artificial tooth structure (104).

## Description

The invention relates to an arrangement.

Beyond this, the invention relates to a method of manufacturing an arrangement.

Furthermore, the invention relates to an apparatus for manufacturing an arrangement.

Dentures or false or artificial teeth are prosthetic devices constructed to replace missing natural teeth, and which are supported by surrounding soft and hard tissues of the oral cavity. Conventional dentures are removable; however there are many different denture designs, some which rely on bonding or clasping onto teeth or dental implants.

DE 3644498 discloses that, in a method of producing ready-made teeth as dentures by a lamination method, plastic is introduced into the hollow mould formed by two mould halves in several consecutive steps, and the tooth with the dentine, the neck and the cutting surface is built up stepwise. The teeth are built up by injection molding by successive injection moulds. A transport or gripping device guides the teeth to be formed, to which the filling funnel and the inflow channels still adhere, for further processing to the next injection mould. After opening of the last injection mould and removal of the coated teeth the filling funnel and the casting channels are separated off.

Handling of artificial teeth during its manufacture may be problematic.

It is an object of this invention to simplify the manufacture and handling of artificial teeth structure.

In order to achieve the object defined above, an arrangement, a method of manufacturing an arrangement, and an apparatus for manufacturing an arrangement according to the independent claims are provided.

According to an exemplary embodiment of the invention, an arrangement is provided which comprises a support plate, at least one artificial tooth structure supported by and completely protruding over the support plate, and at least one sprue each of which interconnecting the support plate with a base portion of a respective one of the at least one artificial tooth structure.

According to another exemplary embodiment of the invention, a method of manufacturing an arrangement is provided, wherein the method comprises forming a support plate, forming at least one artificial tooth structure to be supported by and to completely protrude over the support plate, and forming at least one sprue so as to interconnect, by each of the at least one sprue, the support plate with a base portion of a respective one of the at least one artificial tooth structure.

According to still another exemplary embodiment of the invention, an apparatus for manufacturing an arrangement is provided, the apparatus comprising means for forming a support plate, means for forming at least one artificial tooth structure to be supported by and to completely protrude over the support plate, and means for forming at least one sprue so as to interconnect, by each of the at least one sprue, the support plate with a base portion of a respective one of the at least one artificial tooth structure.

In the context of this application, the term "support plate" may particularly denote any plate-like physical structure being sufficiently stable and robust so as to serve as a mechanical support for the tooth or teeth attached thereto, also allowing for a handling of the arrangement by a user, machine or robot. The support plate may be a thin robust sheet having a longest first extension, a second extension and a smallest third extension. The second extension may be larger than the third extension and smaller than the first extension and may be particularly at least twice, particularly at least four times of the smallest third extension. The support plate may have an elongation or extension being larger than that of the tooth or teeth in at least one direction and may have a mass being larger, particularly at least three times larger than the mass of a tooth. It may be configured to be grippable by a robot or machine or by a human being handling the support plate. The support plate may be a rigid plate, which may be configured to be basically not bendable so as to provide for a robust support for being handled during industrial processes following formation of the arrangement.

The term "artificial tooth structure" may particularly denote a complete (or readily manufactured) artificial tooth as defined below or a mere part thereof (for instance one or more individual layers of an artificial tooth, for example the base layer only). Such a part of an artificial tooth may be a preform (or a pre-stage) of a readily manufactured artificial tooth, for instance one layer of a multiple-layer artificial tooth. Handling of the arrangement may be improved for such a preform (which may require further processing before the preform is completed to finalize an artificial tooth) or for the finished artificial tooth.

The term "artificial tooth" or denture may particularly denote any physical structure which has the shape of a natural tooth of a human being or an animal. Such an artificial tooth structure may be configured for replacing a natural tooth of a human being or an animal when being implanted directly or as part of a tooth prosthesis into a mouth of a person or an animal or used as part of a denture. Such an artificial tooth structure may for instance be a shaped as an anterior tooth or as a posterior tooth. An arrangement according to an embodiment may also include a combination of one or more anterior tooth and one or more posterior tooth.

The term "sprue" may particularly denote a thin rod or stick which spatially separates the tooth from the support plate in a self-supporting manner and is configured to be sufficiently mechanically stable to hold the weight of a tooth whereas at the same time being sufficiently mechanically weak so as to be breakable or meltable for singularization of the tooth or teeth from the arrangement.

In the context of this application, the term "completely protruding" may particularly denote that the artificial tooth or teeth structure is or are exposed entirely to an environment so as to enable further processing of the tooth either manually or machine-aided without the need of separating the tooth from the arrangement. In other words, any processing of the tooth from basically any desired spatial or angular position and at any desired section of the tooth is possible as a result of the complete exposure or protrusion of the tooth over the support plate. A lower portion of the tooth, i.e. a portion of the tooth being directly connected to the sprue, will therefore be located apart from the support plate so as to project over the support plate as well.

In the context of this application, the term "base portion of a tooth" may particularly denote a tooth end section via which a tooth is to be or is anatomically mounted at or in a jaw or in a denture or in the oral cavity of a human being or an animal. Hence, the base portion may be at least partially invisible when being implanted in the jaw or oral cavity. By the term '' jaw '' we refer to any opposable articulated structure at the entrance of the mouth or used as a base for a denture.

According to an exemplary embodiment, a physical structure is provided which comprises one or more tooth all being connected to one and the same physical support structure, i.e. support plate, via a thin coupling piece, i.e. sprue. Such a physical structure may be manufactured by injection molding, compression molding, rapid prototyping, or a combination thereof and can therefore be produced with low costs. At the same time, the protrusion of all teeth to project along its entire extension over an end section of the support plate advantageously allows the arrangement to be handled in a highly efficient manner, since any procedural steps following this manufacturing process can be performed with the tooth or teeth while the latter remain fastened to the support plate via the sprues. The teeth may be hereby spaced by the respective sprue functioning as a spacer element. The reason for this is that the teeth are completely exposed with regard to the environment enabling even complex further processing steps such as grinding, polishing, laser processing, hardening, curing, coating or any other desired machinery to be performed with multiple teeth still being connected (i.e. exclusively indirectly connected) to the support plate.

In the following, further exemplary embodiments of the arrangement will be explained. However, these embodiments also apply to the method of manufacturing an arrangement, and to the apparatus for manufacturing an arrangement.

In an embodiment, the at least one artificial tooth structure is supported exclusively by the at least one sprue and the support plate to be free standing and freely exposed to an environment. Particularly it is possible that exactly one sprue is provided per tooth for connection to the support body. Hence, the sprue or sprues may form the only physical connection structure between the tooth and the support body. Particularly, this may ensure that the teeth on the display carrier (i.e. a final product) are free from flashes (or have only freely exposed flashes) making the finishing process faster and easier which may result in a time and cost reduction. This also is an advantage when it comes to the final use of the teeth by technicians, since they are ready to use, and no extra work for flash-cutting is necessary. In an embodiment, the teeth are attached to the display carrier only from the sprues and are completely protruding (jutting out) of the display carrier. This results in the advantages of being easier in use when it comes to quality control, finishing processes, usage etc.

In an embodiment, a plurality of artificial teeth structure is supported by, and completely protrude over, the support plate. When a plurality of for instance 3, 4, 5 or more teeth are connected to one and the same support plate by means of respective sprues, it is possible to manufacture a number of teeth at the same time and to also continue their handling for a subsequent processing efficiently. Also, such a procedure is highly efficient for high throughput manufacturing of artificial teeth structure.

In an embodiment, the support plate and the at least one artificial tooth structure are made of the same material. Hence, support plate and artificial tooth structure as well as the sprues may be integrally formed from one and the same material and may be manufactured by one and the same process, rendering the manufacturing procedure highly efficient.

Particularly, the support plate may have one of the following shapes:
- the support plate may be configured as a plate;
- the support plate may be configured as a planar strip;
- the support may be configured as an arcuate strip;
- the support plate may be configured as an annulus;
- the support plate may be configured as a circular structure;
- the support plate may be configured as a ring-like, annular structure having a circular outer circumference;
- the support plate may be configured as a polygonal, particularly triangular or rectangular, structure.

Other shapes are possible as well. In an embodiment, a display teeth carrier of arc-shape or another shape (for instance round, etc) is provided. However, the support plate may be advantageously formed as an elongate body allowing for an assembly of a set of artificial teeth structure along an extension of the elongate body.

In an embodiment, the plurality of teeth are arranged laterally adjacent to one another, and the plurality of sprues are arranged to extend parallel to one another. Therefore, the various artificial teeth structure may be arranged next to one another so that either any of the artificial tooth structure has two neighbors (for instance in the context of an annular arrangement) or they may be arranged so that only a first and a last tooth in a row only have one neighbor, the others have two neighbors. It is furthermore possible that not only a one-dimensional arrangement of the tooth is achieved, but that the teeth are arranged in a two-dimensional way, for instance along a matrix-like pattern. In one embodiment, all artificial teeth structure protrude from one and the same surface (particularly planar surface portion), so that the sprues are parallel to one another and each extends from the support plate along a defined direction. However, in an alternative embodiment it is also possible that the sprues are arranged angularly relative to one another or even have an antiparallel extension. The latter case may correspond to an embodiment in which first sprues with connected teeth protrude from one surface region of the arrangement, whereas another set of teeth including sprues project from another, for instance opposing, surface of the arrangement of the support plate.

In an embodiment, a surface of the support plate comprises an inscription indicative of information which may relate to the arrangement. For purposes of documentation, information and retracibility of a manufacturing process, it may be highly advantageous to add an inscription to the support plate of the arrangement. It is possible that the information describes the teeth of the arrangement. It is also possible that the inscription is indicative of a production number or any other identifier allowing to later assign a certain artificial tooth structure to a batch of produced arrangements. This may be also advantageous for quality control purposes as well as the distinction between artificial teeth structure produced by one manufacturer and those produced by other manufacturers. The inscription may be in the form of a number of alphanumeric characters, but may also include encoded information such as a one- or two-dimensional barcode, an attached RFID chip or other kind of transponder, etc. Hence, a display carrier may be provided that can be used to write information concerning the teeth, model, etc on it.

By manufacturing support plate, artificial tooth structure and sprue from a formable, particularly polymerizable material, embodiments of the invention may advantageously benefit of methods such as injection molding, compression molding and rapid prototyping for forming the arrangement with reasonable effort.

In an embodiment, the support plate, the at least one sprue, and at least a part of the (or the entire) at least one artificial tooth structure are made from the same material. Hence, the entire arrangement may be made of one and the same material ensuring proper connection between the at least one tooth and the support plate via the sprue.

In an embodiment, the support plate and/or the at least one artificial tooth structure is or are made from a formable material, particularly from a polymerizable material, more particularly from a mixture of a polymerizable material (e.g. MMA) and Poly(methyl methacrylate), PMMA. For instance, support plate, sprue and artificial tooth structure may be made from one of the group consisting of a plastic material, a ceramic material, a resin, or other materials such as a synthetic material. However, it is preferred that a material of the artificial tooth structure is a plastic such as for example a cross-linked PMMA. Such a material may be supplied in a powder form, in a liquid form or in a semi-liquid form, for instance in a plastified or highly viscous state, or may even be supplied to the systems in an already solid-state. By the application of pressure and/or temperature (particularly injection molding and/or compression molding) and/or by additive formation of a predefined structure (for instance by rapid prototyping) the integral arrangement may then be formed.

In an embodiment, the at least one artificial tooth structure comprises a plurality of individual layers. The arrangement is therefore compatible with a high degree of flexibility when forming the teeth. For instance, in order to manufacture an artificial tooth structure with a color which is very close to the color of natural tooth, it may be advantageous to provide different portions of the artificial tooth structure with different colors. It is also possible to provide different portions of a tooth from materials with different hardness in order to properly simulate the hardness distribution of a natural tooth. For that purpose, it is possible that different materials are for instance supplied in a rapid prototyping or a compression and/or injection molding procedure to therefore form the different portions or sections of the artificial tooth structure which may differ with regard to color, hardness, surface properties such as surface roughness, etc.

In an embodiment, a 1, 2, 3, 4 or 5 layer artificial teeth structure is provided along with a display carrier made from PMMA or other polymerizable or other formable material.

In an embodiment, an enamel (which forms a surface layer, protective layer or coating) and/or a dentin (which forms the core substance of a tooth) is or are freely exposed at an end portion of the artificial tooth structure being located opposing the support plate. Particularly, it may be appropriate to form a tooth simulating a natural tooth of a human being from the three different layers base, enamel and dentin. Freely exposing all three portions of the artificial tooth structure allows to further process even these sections after the manufacture of the arrangement with high flexibility of using equipment, and regardless of the properties of the support plate. By manufacturing the support plate and the sprues, in the same production step as the teeth and from the same material, a manufacture with a low effort and low costs is possible.

In an embodiment, a display teeth carrier made from the same material as the teeth is provided. This accelerates the manufacture and allows a high throughput manufacturing procedure.

In an embodiment, at least one of the group consisting of a cutting edge, a tongue, and a front face of the at least one artificial tooth structure is free of a direct connection with the at least one sprue. The cutting edge of a tooth (particularly an incisor) is an edge at which the tooth naturally performs a cutting. A tongue of a tooth (particularly an incisor) is a concave surface of a tooth opposing a convex surface of the tooth being visible when the tooth is mounted at a jaw. The front surface of a tooth (particularly an incisor) is a convex surface of the tooth being visible when the tooth is mounted at a jaw. Sprues at a tongue may yield to problems during biting when the tooth is implanted to a user's jaw. Thus, all parts of the artificial tooth structure being exposed when being implanted to a mouth or jaw of a human being or an animal may be free of sprues. This prevents functional and visible artifacts arising from any roughness at a position of the tooth from which the sprue has been removed.

In an embodiment, the at least one artificial tooth structure and/or the at least one sprue and/or the support plate comprises a formable or polymerizable material, particularly at least one material of the group consisting of a resin, MMA (methyl methacrylate), PMMA (poly(methyl methacrylate)), cross linked PMMA, and EGDMA (ethylene glycol dimethacrylate). The material used can be any formable or polymerizable material (e.g. resins, MMA, PMMA, cross linked PMMA, EGDMA), with any percentage of initiators, monomer to polymer ratios, etc.

In an embodiment, the at least one artificial tooth structure and/or the at least one sprue and/or the support plate comprises a combination of a first component, constituted by a formable or polymerizable material, with a second component, particularly paper or polytetrafluoroethylene. Particularly, any combination of the above described material and a different component such as (compressed) paper, Teflon^{©} or any other material that could be used as a support matter is possible.

In the following, further exemplary embodiments of the method of manufacturing an arrangement will be explained. However, these embodiments also apply to the arrangement, and to the apparatus for manufacturing an arrangement.

In an embodiment, at least one of the forming procedures comprises at least one of the groups consisting of injection molding, compression molding, and rapid prototyping.

In an embodiment, the support plate and the at least one artificial tooth structure may be formed during the same production step.

In an embodiment, the support plate and/or the at least one tooth is or are manufactured by a combination of injection molding and compression molding.

In an embodiment, the method further comprises further processing the at least one artificial tooth structure while being still connected to the support plate via the at least one sprue. The term "further processing" particularly denotes any industrial process performed for altering a technical property of the tooth. Such a further processing may require use of a further processing tool for modifying a characteristic of the tooth such as a laser or a mechanical polishing tool. In view of the free exposure of the tooth or teeth above an end surface of the support plate any such a tool has free access to the whole or basically the whole surface of the tooth thereby significantly simplifying such further processing with the teeth being still connected to the sprues and the sprues being still connected to the support plate. In other words, further processing may be performed as a batch process with a whole set of teeth altogether securely arranged on the support plate which is significantly more efficient than an individual handling of each artificial tooth structure. Furthermore, the support plate may be gripped by a robot or any other processing machine for the group-wise further processing. In an embodiment, a display carrier can hence be used as a 'pass-on-to-the-next -step' system.

In an embodiment, the method further comprising singularizing the at least one artificial tooth structure from the at least one sprue after the further processing. Singularization may be performed for instance by breaking or cutting or melting a connection between a respective tooth of the arrangement and a corresponding sprue. Such a singularized tooth may then be implanted into a jaw of a human being or an animal or may be connected, together with other singularized teeth, to form a denture.

In an embodiment, the method further comprises passing on the arrangement for further processing, particularly for one of the group consisting of cleaning, chamfering, removing the at least one artificial tooth structure from the corresponding at least one sprue, particularly by laser treatment, quality control, finishing, cutting off the flash, and writing information on the support plate.

The aspects defined above and further aspects of the invention are apparent from the examples of embodiment to be described hereinafter and are explained with reference to these examples of embodiment.

### BRIEF DESCRIPTION OF THE DRAWINGS

The invention will be described in more detail hereinafter with reference to examples of embodiment but to which the invention is not limited.
Figure 1 to Figure 3 illustrate display carriers of different shape depending on the used (for example chosen) mould according to exemplary embodiments of the invention.
Figure 4 illustrates a model, made from Polyamide, of an arrangement having a display carrier according to an exemplary embodiment of the invention.
Figure 5 to Figure 7 illustrate three layers of an artificial tooth structure, i.e. the base, the dentin and the enamel layers, for a front tooth (Figure 5 and Figure 6) and for a back tooth (Figure 7) according to exemplary embodiments of the invention.
Figure 8 shows two separate mould components of a compression molding apparatus according to an exemplary embodiment of the invention. These are only 2 of the needed molds for a multiple-layer-embodiment; the total number of molds (k) depends upon the number of layers (i) (k = i + 1).
Figure 9 shows the two mould components of the compression molding apparatus of Figure 8 after being mounted to one another for forming an arrangement according to an exemplary embodiment of the invention by compression molding.
Figure 10 illustrates an arrangement with a display carrier having projecting base layer structures as preforms of artificial teeth to be formed according to an exemplary embodiment of the invention.
Figure 11 shows part of an apparatus for manufacturing an arrangement according to an exemplary embodiment of the invention which allows further processing of the entire arrangement before singularization of individual teeth.

### DESCRIPTION OF EMBODIMENTS

The illustration in the drawing is schematically.

A process for manufacturing denture teeth on a display carrier according to an embodiment involves 3 separate provisions of polymerizable material (as described above) in order to create teeth consisting of three layers (the base, the dentin and the enamel layer). The result is a biscuit consisting of a display carrier with the teeth attached to it only from one sprue. The display carrier may be a material reservoir and may be of the same material as the 3-layer-teeth.

Embodiments of the invention relate to the manufacture of denture (artificial) teeth and display carrier thereof. Embodiments of the invention relate to the manufacture of a display teeth carrier made simultaneously and from the same material as the produced teeth.

Conventionally, in the production of denture (artificial) teeth, the teeth placement on the display carrier is a separate step in the manufacturing process. This involves the detachment of the teeth from the biscuit and their subsequent placement on the display carriers. In most cases this is a manual, time and cost consuming process. Embodiments of the present invention omit these two steps by incorporating the positioning of the produced teeth into the overall making process. With this a reduction of the overall time will be achieved. Also, the teeth are always in fixed positions, facilitating the following processes (for instance the quality control). The material reservoir forming the display carrier may be polymerized and hardened simultaneously with the teeth and later on it works as the display carrier of the produced teeth.

The display carrier can be used as a means for display: it can be colored or it can also be used to write information for the model, the date, the company, a description of the product, a Lot Number etc. The carrier can also be employed as a pass-on system, since it can be directly moved from the moulds to the next station, for instance to finishing, for the cutting of the flash or to the writing of the display information.

Embodiments of the invention can be used for the manufacture of 1,2,3,4 or 5-layer teeth which can be produced for instance from compression molding. Any polymerizable or other formable material that is suitable for teeth manufacture can be employed.

In the following, a description of manufacture of the display carrier will be given.

During the production process the material may be placed into the material reservoir and is then compressed and formed into the molds (the material reservoir, the sprues and the teeth cavities). Temperature, pressure and other working conditions may be set. No extra adjustments are required for the display carrier since it is formed simultaneously with the teeth.

The produced display carrier can be of any shape; its shape depends on the used moulds. So, the shape can be for instance rectangular, arc-shaped, round or of any other shape.

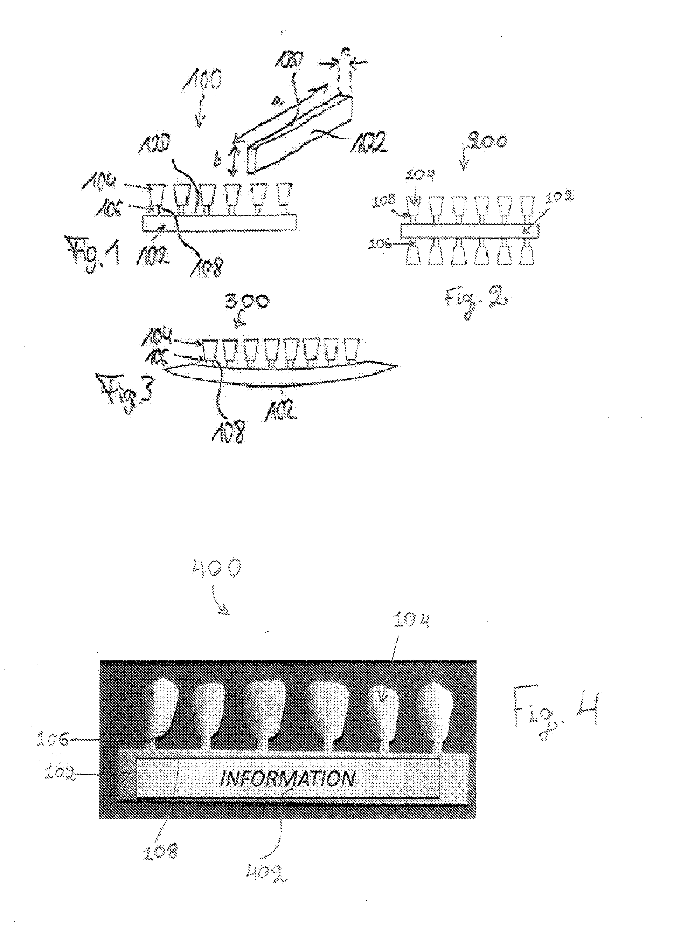

**Fig. 1** illustrates an arrangement 100 according to an exemplary embodiment of the invention. The arrangement 100 comprises a support plate 102 which is configured as a plate-like planar strip in the present embodiment.

As shown in Fig. 1 as well, the support plate 102 is in this embodiment a cuboid having a longest side with length a, a medium side with length b, and a short side with length c, wherein a>b>c. For instance, a may be in a range between 2 cm and 20 cm, particularly in a range between 4 cm and 10 cm. For instance, b may be in a range between 3 mm and 3 cm, particularly in a range between 7 mm and 1,5 cm. For instance, c may be in a range between 1 mm and 1 cm, particularly in a range between 2 mm and 5 mm.

The support plate 102 is made of a plastic material similar to that of the different teeth-layers. Also the support plate 102 could be a combination of this, above described, material and a different component such as (compressed) paper, Teflon^{©} or any other material that could be used as a support parameter. As can further be taken from Fig. 1, a plurality of sprues 106 are integrally formed with the support plate 102 and protrude from a basically planar surface 120 of the support plate 102, wherein a right angle is formed between the planar surface 120 of the support plate 102 and the protruding direction of all sprues 106. A plurality of artificial teeth 104 (which may all have the same shape or which may have different shapes) are part of the arrangement 100, wherein each of the artificial teeth 104 is attached with its base portion 108 to one end of a respective sprue 106, whereas another end of the post-like sprue 106 is connected to and is integral with the support plate 102. Therefore, the respective sprue 106 interconnects the support plate 102 with a base portion 108 of a respective tooth 104. The base portion 108 is the part of the tooth 104 which is, naturally, anatomically mounted in the jaw of a human being or an animal.

Generally, when referring to a "tooth" (reference numeral 104) in the context of this application, the corresponding embodiments may relate to a complete tooth (for instance having one, two, three or more layers), but are applicable as well to other embodiments having just one layer (for instance the base layer).Fig. 1 also illustrates that each of the artificial teeth 104 is completely and with its full extension arranged outside of, spaced with regard, and located apart from the support plate 102 so that the entire three-dimensional surface of each of the teeth 104 is freely accessible from any direction for manually or machine-based processing of each individual tooth 104 of the arrangement 100. The arrangement 100 may require further processing such as flash removal, chamfering or laser polishing which can all be done before singularization of the individual teeth 104 from the sprues 106 and from the support plate 102. After singularization, each of the individual teeth 104 can then be used for the formation of a dental prosthesis or can be implanted into a mouth of a human body or an animal, for instance to replace natural teeth.

In the present embodiment, the support plate 102, the artificial teeth 104 and the sprues 106 are all made of the same material, i.e. PMMA which is a polymerizable or formable material and/or a combination of this, above described, material and a different component such as (compressed) paper, Teflon^{©} or any other material that could be used as a support parameter.. Therefore, the arrangement 100 can be manufactured by injection molding and/or compression molding and/or rapid prototyping and/or any combination of the abovementioned methods.

By the term "rapid prototype", reference is made to a process used for the automatic construction of different physical objects. This method may include the Selective laser sintering (SLS), the Direct Metal Laser Sintering (DMLS), the Fused deposition modeling (FDM), the Stereolithography (SLA), the Laminated object manufacturing (LOM), the Electron beam melting (EBM), the 3D printing (3DP) and other systems as well, as known by a person skilled in the art.

As can be taken from Fig. 1, the teeth 104 are arranged laterally adjacent to one another along a horizontal direction, and the sprues 106 are arranged to extend parallel to one another and along a vertical direction. Therefore, a highly symmetric arrangement is obtained which allows handling the arrangement 100 by a robot or any other kind of processing machine with high accuracy.

**Fig. 2** shows an arrangement 200 according to another exemplary embodiment of the invention. The arrangement 200 of Fig. 2 differs from the arrangement 100 shown in Fig. 1 in that the teeth (104) are protruding from both sides of the support plate 102. **Fig. 3** shows an arrangement 300 according to still another exemplary embodiment of the invention in which the support plate is configured of an arcuate strip 102.

**Fig. 4** is an image of an arrangement 400 according to still another exemplary embodiment of the invention. Fig. 4 shows that different kinds of teeth, as naturally occurring at human beings, can be arranged along the display carrier 102 which is again shaped as a plate-like strip. As schematically indicated in Fig. 4, any information or other kind of inscription 402 can be provided at one or more of the planar surfaces of the support plate 102.

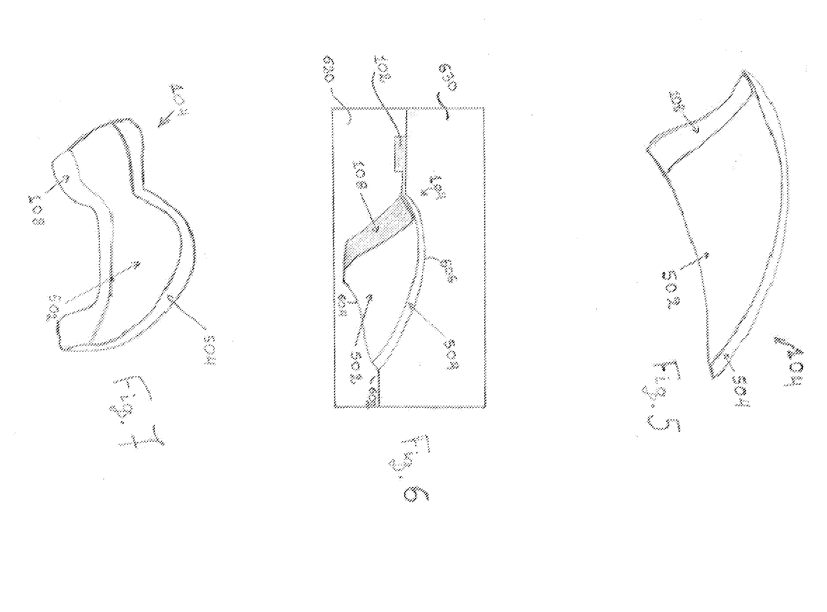

**Fig. 5** schematically illustrates an artificial tooth that can be formed by three different layers, i.e. a base layer 108, a dentin layer 502 and an enamel layer 504 so as to properly simulate colors and/or hardness and/or appearance of different sections of a tooth, as naturally occurring.

**Fig. 6** shows again the tooth 104 of Fig. 5 however between two different moulds 620, 630 of a compression mould apparatus. A cutting edge 602, a tongue surface 604, and a front surface 606 of the artificial tooth 104 are all free of a direct connection with the sprue 106. The sprue 106 is exclusively and directly connected to the base portion 108 and bridges the support plate 102 with regard to the tooth 104.

**Fig. 7** shows a view of another tooth 104 made of multiple layers.

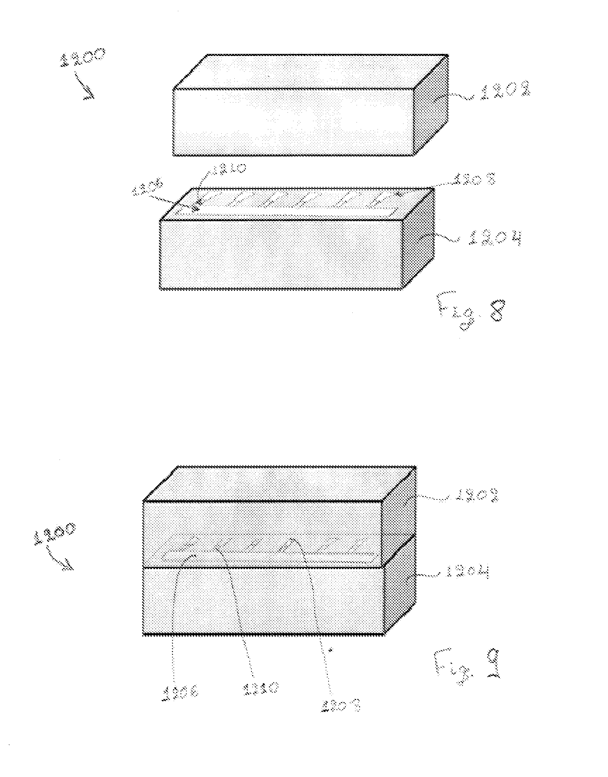

**Fig. 8** shows an apparatus 1200 for manufacturing an arrangement according to an exemplary embodiment of the invention. The apparatus 1200 comprises a first (upper or lower) mould 1202 and a corresponding second (lower or upper) mould 1204. The moulds 1202, 1204 are shown separately in Fig. 8. As can be taken from Fig. 8, the second mould 1204 comprises recesses 1206, 1208, 1210 which are interconnected to one another. A first recess portion 1206 has an inverse shape of a support plate to be manufactured. A second recess portion 1208 has an inverse shape of an artificial tooth to be manufactured. A third recess portion 1210 interconnecting the first recess portion 1206 with the second recess portion 1208 has the inverse shape of a sprue to be manufactured. Although not shown in Fig. 8, also a lower surface of the first mould 1202 has a corresponding recess structure, i.e. recesses corresponding to the recesses 1206, 1208 and 1210.

In order to now manufacture an arrangement according to an exemplary embodiment of the invention, a material of composition as described above may be inserted in the recesses 1206, 1208, 1210 of the moulds 1204, 1202.

Then, as can be taken from **Fig. 9**, the two moulds 1202, 1204 are connected to one another and pressure and/or heat is supplied so that an arrangement according to an exemplary embodiment of the invention is formed by compression, i.e. the application of the pressure only. Therefore, the arrangement can be formed by compression molding.

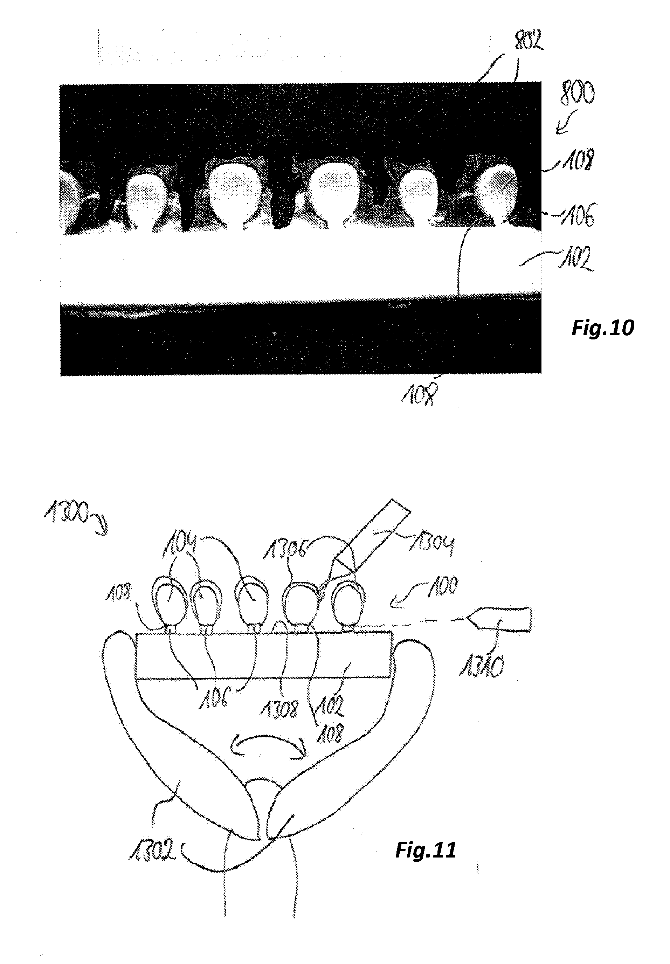

**Fig. 10** is a photograph of an arrangement 800 according to another exemplary embodiment of the invention which is obtained by compression molding. In view of this manufacturing process, each of the base layer structures 108 (of artificial teeth to be manufactured, not shown) shown there and protruding spaced by a sprue 106 from a support plate 102 still has flashes 802 as thin excessive sections of excessive material. Since the base layer structures 108 completely protrude over the support plate 102 and are therefore freely accessible, the flashes 802 can be removed by further processing without the need of previously singularizing the individual base layer structures 108 from the sprues 106 and from the support plate 102. This great advantage results from the fact that the base layer structures 108 completely protrude over a surface of the support plate 102.

After forming arrangement 800 and removing the flashes 802 while the base layer structures 108 remain connected to the support plate 102 via the respective sprues 106, the remaining layer or layers (for instance 502, 504) can be formed while the base layer structures 108 still remain connected to the support plate 102 via the respective sprues 106.

For performing such or another further processing, an apparatus for manufacturing an arrangement according to an exemplary embodiment of the invention may further comprise a further processing tool configured for further processing the at least one artificial tooth structure while being connected via respective sprues to the support plate. After (or without) further processing, at least one further component of the at least one tooth may be formed on the at least one artificial tooth structure while the at least one artificial tooth structure still remains connected via the respective sprue(s) to the support plate. Such a formation procedure and/or further processing procedure may be repeated any desired number of times.
Generally, when referring to a "tooth" (reference numeral 104) in the context of this application, the corresponding embodiments may relate to a complete tooth (for instance having one, two, three or more layers), but are applicable as well to other embodiments having just one layer (for instance the base layer).**Fig. 11** shows part of an apparatus 1300 for manufacturing an arrangement 100 according to an exemplary embodiment of the invention which allows further processing of the entire arrangement 100 before singularization of individual teeth 104.

Apparatus 1300 has a robot gripping, by a gripper unit 1302, the rigid support plate 102 of the arrangement 100, for instance after removing it from molds. The gripper unit 1302 and/or a post processing laser 1304 (or any other further processing tool) may be moved relative to one another so as to allow the post processing laser 1304 to remove flashes 1306 or burrs which may be formed unintentionally during the compression molding process. In view of the complete exposure and protruding of the teeth 104 and the sprues 106 over an upper planar surface 1308 of the support plate 102 the post processing laser 1304 may be freely moved around the teeth 104 so as to properly impact accurately adjustable portions of the excessive sheet-like plastic material 1306 to remove it in order to form a smooth surface for polishing or chamfering purposes. This is enabled by the combination of the protruding of the teeth 104, the secure grip of the support plate 102 and the connection of the sprues 106 to the base portion 108 of the teeth 104.

After the batch-like post processing of the teeth 104 of the arrangement 100, the teeth 104 may be also singularized by a separating the teeth 104 from the sprues 106. This is performed by a cutting laser 1310 for laser cutting the artificial teeth 104 from the respective sprue 106 after the further processing.

It should be noted that the term "comprising" does not exclude other elements or features and the "a" or "an" does not exclude a plurality. Also elements described in association with different embodiments may be combined.

It should also be noted that reference signs in the claims shall not be construed as limiting the scope of the claims.

## Claims

1. An arrangement (100), comprising:
a support plate (102);
at least one artificial tooth structure (104), particularly a plurality of artificial tooth structures (104), supported by and completely protruding over the support plate (102);
at least one sprue (106) each of which interconnecting the support plate (102) with a base portion (108) of a respective one of the at least one artificial tooth structure (104).

2. The arrangement (100) according to claim 1, wherein the at least one artificial tooth structure (104) is supported exclusively by the at least one sprue (106) and the support plate (102) to be free standing and freely exposed to an environment, particularly being free of flashes.

3. The arrangement (400) according to claim 1 or 2, wherein a surface of the support plate (102) comprises an information display surface (402) configured for displaying information, particularly information relating to the arrangement (100).

4. The arrangement (100) according to any one of claims 1 to 3, wherein the support plate (102), the at least one sprue (106), and at least a part of the at least one artificial tooth structure (104) are made of the same material.

5. The arrangement (100) according to any one of claims 1 to 4, wherein the at least one artificial tooth structure (104) comprises a plurality of individual layers (108, 502, 504).

6. The arrangement (100) of any one of claims 1 to 5, comprising at least one of the following features:
an enamel (504) and/or a dentin (502) of the at least one artificial tooth structure (104) is or are freely exposed at an end portion of the artificial tooth structure (104) being located opposing to the support plate (102);
at least one of the group consisting of a cutting edge (602), a tongue (604), and a front face (606) of the at least one artificial tooth structure (104) is free of a direct connection with the at least one sprue (106).

7. The arrangement (100) of any one of claims 1 to 6, wherein the support plate (102) has one of the following shapes:
- the support plate is configured as a planar strip;
- the support is configured as an arcuate strip;
- the support plate is configured as an annulus;
- the support plate is configured as a circular structure;
- the support plate is configured as a ring-like, annular structure having a circular outer circumference;
- the support plate is configured as a polygonal, particularly triangular or rectangular, structure.

8. The arrangement (100) of any one of claims 1 to 7, wherein at least one of the group consisting of the at least one artificial tooth structure (104),the at least one sprue (106), and the support plate (102) comprises:
a formable or polymerizable material, particularly at least one material of the group consisting of a resin, MMA, PMMA, cross linked PMMA, and EGDMA; or
a combination of a first component, constituted by a formable or polymerizable material, with a second component, particularly paper or polytetrafluoroethylene.

9. A method of manufacturing an arrangement (100), the method comprising:
forming a support plate (102);
forming at least one artificial tooth structure (104) to be supported by and to completely protrude over the support plate (102);
forming at least one sprue (106) so as to interconnect, by each of the at least one sprue (106), the support plate (102) with a base portion (108) of a respective one of the at least one artificial tooth structure (104).

10. The method according to claim 9, comprising at least one of the following features:
at least one of the forming steps comprises at least one of the group consisting of injection molding, compression molding, and rapid prototyping; the support plate (102) and the at least one artificial tooth structure (104) are formed simultaneously.

11. The method according to any one of claims 8 to 9, wherein the method further comprises further processing the at least one artificial tooth structure (104) while being still connected to the support plate (102) via the at least one sprue (106).

12. The method according to claim 11, further comprising singularizing the at least one artificial tooth structure (104) from the at least one sprue (106) after the further processing.

13. The method according to claim 11 or 12 wherein the further processing comprises at least one of the group consisting of cleaning the at least one artificial tooth structure (104), chamfering the at least one artificial tooth structure (104), removing the at least one artificial tooth structure (104) from the corresponding at least one sprue (106), particularly by laser treatment, quality control of the at least one artificial tooth structure (104), finishing the at least one artificial tooth structure (104), cutting off flash from the at least one artificial tooth structure (104), and writing information on the support plate (102).

14. An apparatus (1200) for manufacturing an arrangement (100), the apparatus (1200) comprising:
means (1206) for forming a support plate (102);
means (1208) for forming at least one artificial tooth structure (104) to be supported by and to completely protrude over the support plate (102);
means (1210) for forming at least one sprue (106) so as to interconnect, by each of the at least one sprue (106), the support plate (102) with a base portion (108) of a respective one of the at least one artificial tooth structure (104).

15. The apparatus (1200) according to claim 14, further comprising at least one of the group consisting of:
means (1302, 1304) for further processing the at least one artificial tooth structure (104) while being still connected to the support plate (102) via the at least one sprue (106); and
means (1310) for singularizing the at least one artificial tooth structure (104) from the at least one sprue (106) after further processing the at least one artificial tooth structure (104).

## Amended claims

### Amended claims in accordance with Rule 137(2) EPC.

**1.** A method of manufacturing an arrangement (100), the method comprising:
forming a support plate (102);
forming at least one artificial tooth or a part thereof (104) to be supported by and to completely protrude over the support plate (102);
forming at least one sprue (106) so as to interconnect, by each of the at least one sprue (106), the support plate (102) with a base portion (108) of a respective one of the at least one artificial tooth or a part thereof (104),
wherein the method further comprises further processing the at least one artificial tooth or a part thereof (104) while being still connected to the support plate (102) via the at least one sprue (106).

**2.** The method of manufacturing the arrangement (100) according to claim 1, wherein the one artificial tooth or a part thereof (104) is supported exclusively by one sprue (106) and the support plate (102) to be free standing and freely exposed to an environment, particularly being free of flashes.

**3.** The method of manufacturing the arrangement (400) according to claim 1 or 2, wherein a surface of the support plate (102) comprises an information display surface (402) configured for displaying information, particularly information relating to the arrangement (100).

**4.** The method of manufacturing the arrangement (100) according to any one of claims 1 to 3, wherein the support plate (102), the at least one sprue (106), and at least a part of the at least one artificial tooth or a part thereof (104) are made of the same material.

**5.** The method of manufacturing the arrangement (100) according to any one of claims 1 to 4, wherein the at least one artificial tooth or a part thereof (104) comprises a plurality of individual layers (108, 502, 504).

**6.** The method of manufacturing the arrangement (100) of any one of claims 1 to 5, comprising at least one of the following features:
an enamel (504) and/or a dentin (502) of the at least one artificial tooth or a part thereof (104) is or are freely exposed at an end portion of the artificial tooth structure (104) being located opposing to the support plate (102);
at least one of the group consisting of a cutting edge (602), a tongue (604), and a front face (606) of the at least one artificial tooth or a part(104) is free of a direct connection with the at least one sprue (106).

**7.** The method of manufacturing the arrangement (100) of any one of claims 1 to 6, wherein the support plate (102) has one of the following shapes:
- the support plate is configured as a planar strip;
- the support is configured as an arcuate strip;
- the support plate is configured as an annulus;
- the support plate is configured as a circular structure;
- the support plate is configured as a ring-like, annular structure having a circular outer circumference;
- the support plate is configured as a polygonal, particularly triangular or rectangular, structure.

**8.** The method of manufacturing the arrangement (100) of any one of claims 1 to 7, wherein at least one of the group consisting of the at least one artificial tooth or a part thereof (104), the at least one sprue (106), and the support plate (102) comprises:
a formable or polymerizable material, particularly at least one material of the group consisting of a resin, MMA, PMMA, cross linked PMMA, and EGDMA; or
a combination a formable or polymerizable material, with a paper or polytetrafluoroethylene.

**9.** The method according to any one of the claims 1 to 8, comprising at least one of the following features:
at least one of the forming steps comprises at least one of the group consisting of injection molding, compression molding, and rapid prototyping; the support plate (102) and the at least one artificial tooth or a part thereof (104) are formed simultaneously.

**10.** The method according to any one of the claims 1 to 9, further comprising singularizing the at least one artificial tooth or a part thereof (104) from the at least one sprue (106) after the further processing.

**11.** The method according to any one of the claims 1 to 10, wherein the further processing comprises at least one of the group consisting of cleaning the at least one artificial tooth or a part thereof (104), chamfering the at least one artificial tooth or a part thereof (104), removing the at least one artificial tooth or a part thereof (104) from the corresponding at least one sprue (106), particularly by laser treatment, quality control of the at least one artificial tooth or a part thereof (104), finishing the at least one artificial tooth or a part thereof (104), cutting off flash from the at least one artificial tooth or a part thereof (104), and writing information on the support plate (102).

**12.** An apparatus (1200) for manufacturing an arrangement (100), the apparatus (1200) comprising:
means (1206) for forming a support plate (102);
means (1208) for forming at least one artificial tooth or a part thereof (104) to be supported by and to completely protrude over the support plate (102);
means (1210) for forming at least one sprue (106) so as to interconnect, by each of the at least one sprue (106), the support plate (102) with a base portion (108) of a respective one of the at least one artificial tooth or a part thereof (104), and
means (1302, 1304) for further processing the at least one artificial tooth or a part thereof (104) while being still connected to the support plate (102) via the at least one sprue (106).

**13.** The apparatus (1200) according to claim 12, further comprising:
means (1310) for singularizing the at least one artificial tooth or a part thereof (104) from the at least one sprue (106) after further processing the at least one artificial tooth or a part thereof (104).
